# FASCICULE DE BREVET EUROPEEN

(11) **EP 0 937 573 B1**
(45) Date de publication et mention de la délivrance du brevet: **10.03.2004**
(21) Numéro de dépôt: 99102438.1
(22) Date de dépôt: 09.02.1999
(51) Int. Cl.: B31B 1/74, G01N 21/86, G01B 11/02

(54) **Procédé, dispositif et utilisation de ce dispositif pour vérifier la précision du pliage d'une boîte parallélepipèdique**
Verfahren und Vorrichtung zur Überprüfung der Präzision der Faltung einer quaderförmigen Schachtel und Verwendung einer solchen Vorrichtung
Process, device and use of this device to check the precision of the folding of a parallelepipedic box

(30) Priorité: 19.02.1998 FR 9802232
(43) Date de publication de la demande: 25.08.1999
(73) Titulaire: Martin, 69628 Villeurbanne (FR)
(72) Inventeur: Battut, Jean-Frédéric, 69500 Bron (FR)
(74) Mandataire: Colomb, Claude

(56) Documents cités:
- EP-A- 0 186 619
- DE-A- 3 528 047
- US-A- 5 212 656

## Description

La présente invention se rapporte à un procédé, à un dispositif, ainsi qu'à une utilisation de ce dispositif pour vérifier la précision du pliage d'une boîte parallélépipèdique réalisée à partir d'une découpe de carton comprenant quatre panneaux adjacents s'étendant entre deux bords parallèles opposés de cette découpe, les autres côtés de ces panneaux étant alignés selon deux lignes parallèles, un desdits deux bords parallèles opposés de la découpe étant muni d'une patte de collage, au moins certains desdits autres bords de ces panneaux adjacents étant associés à des rabats destinés à fermer les faces supérieure et inférieure de la boîte, des lignes de pliage étant ménagées entre ces panneaux d'une part et entre ces panneaux et lesdits rabats d'autre part, des refentes à bords parallèles étant ménagées entre lesdits rabats adjacents, la boîte étant réalisée par pliage des deux panneaux latéraux adjacents audits bords opposés de la découpe sur les deux autres panneaux pour amener lesdits bords opposés de ladite découpe à se joindre avec chevauchement de ladite patte de collage.

Si les lignes de pliage entre les panneaux adjacents d'une telle boîte ne sont pas parallèles par exemple, ce défaut se répercute sur le parallélisme entre les bords adjacents des refentes formées sur les rabats attachés aux deux panneaux adjacents aux deux bords parallèles opposés de la découpe de carton, qui se rejoignent lors de son pliage. Cet écartement entre les bords adjacents des refentes sera plus grand entre les rabats situés d'un côté des panneaux qu'entre les rabats situés du côté opposé des panneaux. Au-delà d'une certaine tolérance, fixée par le fabricant en fonction du type d'emballage, le carton doit être mis au rebut.

Pour définir les lignes de pliage sur une découpe de carton, on refoule le carton le long de ces lignes de pliage. Le carton ondulé comporte un risque accru de présenter des défauts, notamment des défauts de parallélisme entre ces lignes de pliage, en raison des ondulations qui, si elles ne sont pas parfaitement alignées avec les lignes de refoulement, permettent à ces lignes de refoulement de se situer à cheval sur deux ondulations adjacente du carton ondulé, de sorte que le pliage peut alors se produire plutôt selon l'axe de l'une des ondulations que selon la ligne de refoulement, induisant ainsi une distorsion dans la forme du carton qui se répercute sur le parallélisme des refentes ménagées sur les rabats attenants aux deux panneaux de la découpe de carton qui se rejoignent. Il est dès lors possible d'effectuer une mesure de cet espace de chaque côté des panneaux repliés et d'en comparer la largeur pour voir quel est le défaut de parallélisme. Il est également possible que ces ondulations induisent un décalage de la position des lignes de pliage, qui, au-delà d'une certaine valeur n'est plus acceptable.

La demande de brevet européen EP 0 186 619 A2 se rapporte à un dispositif permettant de détecter l'espace séparant les rabats d'une boîte pliée en utilisant un moyen de détection constitué par un dispositif d'émission de lumière comportant une fente plus longue que l'espace séparant les rabats, le moyen de détection comprenant en outre deux passages inclinés débouchant dans la fente sus-mentionnée, l'un de ces passages étant muni d'unre source de lumière et l'autre étant équipé de fibres optiques reliées à un convertisseur de signal lumineux de façon à émettre une valeur représentative de la largeur mesurée de l'espace séparant les rabats de la boîte pliée. Ce dispositif présente toutefois l'inconvénient d'être, en raison de sa conception, très sensible aux poussières émanant des boîtes pliées en carton. Ces poussières de carton provoquent inévitablement l'encrassement de la source lumineuse et des capteurs à fibre optiques rendant, par là, le fonctionnement peu sûr du dispositif.

Le but de la présente invention vise à remédier à l'inconvénient précité et est précisément d'effectuer une détection très sure de la largeur des deux refentes formées par les rabats attenants aux deux panneaux d'extrémité de la découpe de carton après le pliage de ces panneaux selon les lignes de pliages et de détecter les écartements sortant des normes établies, de manière à pouvoir éliminer les cartons défectueux sur la base d'un critère objectif déterminé par le fabricant

A cet effet, la présente invention a tout d'abord pour objet un procédé pour vérifier la précision du pliage d'une boîte parallélépipèdique, tel que mentionné précédemment, selon la revendication 1. Elle a également pour objet un dispositif pour la mise en oeuvre de ce procédé selon la revendication 4, ainsi qu'une utilisation de ce dispositif sur une plieuse de découpes de carton, selon la revendication 7.

Etant donné que les lignes de pliage entre les quatre panneaux de la découpe de carton à plier sont parallèles à l'axe de déplacement de ces découpes sur la plieuse, il en est de même pour les refentes ménagées entre les rabats attenants aux panneaux d'extrémités de la découpe de carton, dont les bords se rejoignent après pliage. De ce fait, il est aisé de mesurer la largeur de ces refentes au fur et à mesure du déplacement de la découpe de carton pliée sur la plieuse. Comme on le verra, de préférence cette mesure est effectuée à l'aide d'une raie lumineuse rectiligne formée par un pinceau lumineux incliné par rapport au plan de la découpe, de manière à créer, compte tenu de l'épaisseur du carton, un décalage entre la partie de la raie lumineuse située dans la refente et le reste de la raie, permettant de clairement visualiser et mesurer la longueur de cette ligne décalée.

De ce fait, il est possible de faire en sorte de contrôler tous les cartons au cours de l'opération de pliage sans que cette opération n'entraîne de perte de temps. Par conséquent, le coût de l'opération se limite essentiellement à l'investissement de l'installation de contrôle et à sa mise au point en fonction de chaque série de cartons. De préférence, l'utilisation du dispositif avec une plieuse permet une élimination automatique des cartons non conformes aux tolérances.

Le dessin annexé illustre, très schématiquement et à titre d'exemple un mode de mise en oeuvre du procédé objet de la présente invention.
La figure 1 illustre un poste de détection pour la mesure des refentes, ainsi qu'une découpe de carton passant vis-à-vis du poste de détection après son pliage;
La figure 2 est une vue de détail agrandie, en perspective, de la figure 1, montrant une partie du carton avec sa refente avant passant à travers le pinceau lumineux formant à sa surface une raie lumineuse;
La figure 3 est une vue en élévation latérale par rapport à l'axe de déplacement des découpes sur la plieuse, d'un schéma illustrant l'ensemble du système de mesure pour la mise en oeuvre du procédé objet de l'invention et le dispositif d'éjection des découpes hors normes commandé par le système de mesure.

Etant donné que la plieuse ne fait pas partie de la présente invention, elle n'est pas représentée dans le dessin annexé, seul l'axe et le sens de déplacement (4) des découpes de carton (1) sur cette plieuse, ainsi qu'un transporteur à rouleaux (T) de type connu, entraîné par un moteur non représenté, destiné à déplacer les découpes de carton (1) sur la plieuse sont indiqués.

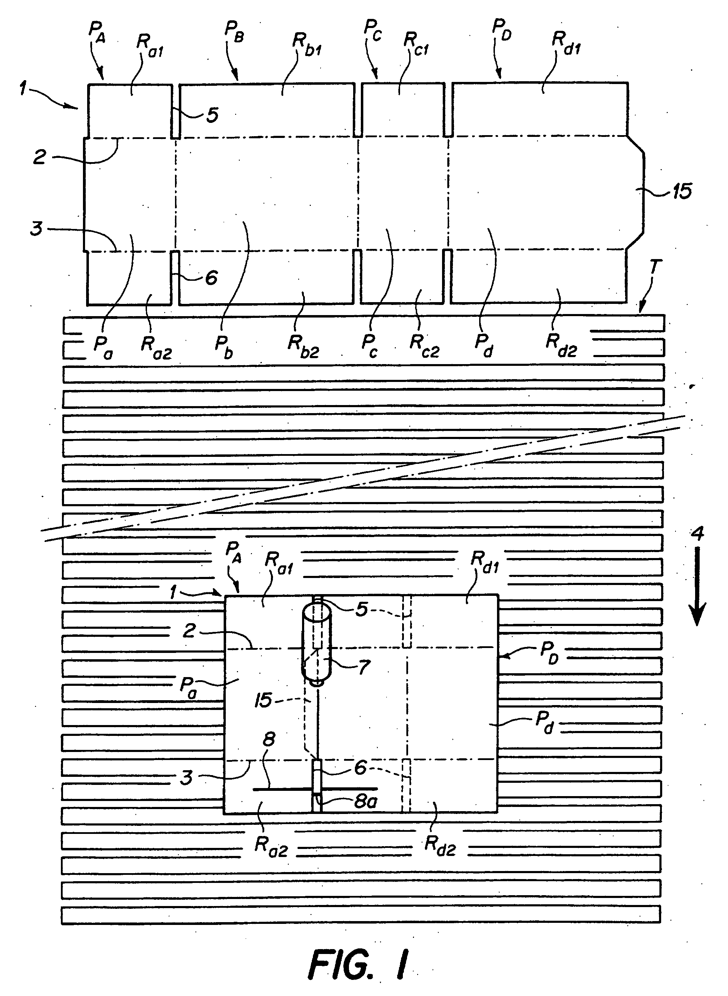

La figure 1 représente une découpe de carton 1 avant pliage formée de quatre panneaux P_{A}, P_{B}, P_{C}, P_{D}, adjacents s'étendant entre deux bords opposés parallèles à l'axe et au sens du déplacement 4 de la découpe de carton 1 sur le transporteur T. La figure 1, illustre également la découpe de carton après pliage des deux panneaux P_{A}, P_{D} adjacents aux deux bords opposés de la découpe de carton 1 sur les deux panneaux P_{B}, P_{C}. Deux lignes de pliage parallèles 2 et 3 s'étendant transversalement à l'axe de défilement 4 de la découpe de carton 1, divisent chaque panneau P_{A}, P_{B}, P_{C}, P_{D,} en un panneau Pₐ, P_{b}, P_{c}, P_{d,} chacun attenant à deux rabats Rₐ₁, Rₐ₂, R_{b1}, R_{b2}, R_{c1}, R_{c2}, respectivement R_{d1}, R_{d2}. Les panneaux Pₐ, P_{b}, P_{c}, P_{d,} sont destinés à former les quatre parois latérales de la boîte en carton, et les rabats Rₐ₁, Rₐ₂, R_{b1}, R_{b2}, R_{c1}, R_{c2}, R_{d1}, R_{d2} sont destinés à fermer les faces supérieure et inférieure de cette boîte.

Des refentes 5 séparent les rabats Rₐ₁, R_{b1}, R_{c1}, R_{d1} adjacents à la ligne de pliage 2, tandis que des refentes 6 séparent les rabats Rₐ₂, R_{b2}, R_{c2}, R_{d2} adjacents à la ligne de pliage 3. Seules les refentes 5 entre les rabats Rₐ₁, R_{d1} et les refentes 6 entre les rabats Rₐ₂, R_{d2}, apparaissent sur le dessus de la découpe de carton 1 pliée. Deux autres refentes 5 et 6 sont recouvertes par les panneaux P_{A}, P_{D} et les quatre autres se situent dans les plis entre les panneaux P_{A} et P_{B}, respectivement entre les panneaux P_{C} et P_{D} et ne sont donc visibles que sur la découpe de carton 1 représentée avant pliage.

Les refentes 5 et 6 ménagées entre les rabats Rₐ₁, R_{d1}, respectivement entre les rabats Rₐ₂, R_{d2} résultent de la jonction entre les bords des deux panneaux P_{A}, P_{D} après leur rabattement sur les deux autres panneaux. La largeur et le parallélisme de ces deux refentes 5 et 6 est donc fonction de la précision de la position et du parallélisme des lignes de pliage entre les panneaux P_{A}, P_{B}, respectivement entre les panneaux P_{C}, P_{D}. Pour maintenir les panneaux Pₐ-P_{d} assemblés après le pliage, l'un des panneaux d'extrémité, par exemple Pₐ présente une patte de collage 15 qui dépasse du bord de la découpe de carton 1.

Lors du pliage, les découpes de carton 1 sont déplacées par le transporteur T entraîné par son moteur et passent ainsi vis-à-vis des différents postes de travail (non représentés) de la plieuse. Le panneau Pₐ est plié après le panneau P_{d}, de sorte que la patte de collage 15 est recouverte par le panneau Pₐ. La face inférieure du panneau Pₐ ou la face supérieure de la patte de collage 15 est enduite de colle, de sorte que les deux panneaux d'extrémités Pₐ, P_{d} de la découpe de carton 1 sont fixés l'un à l'autre après rabattement de ces panneaux d'extrémités, réunissant ainsi les quatre parois latérales de la boîte en carton.

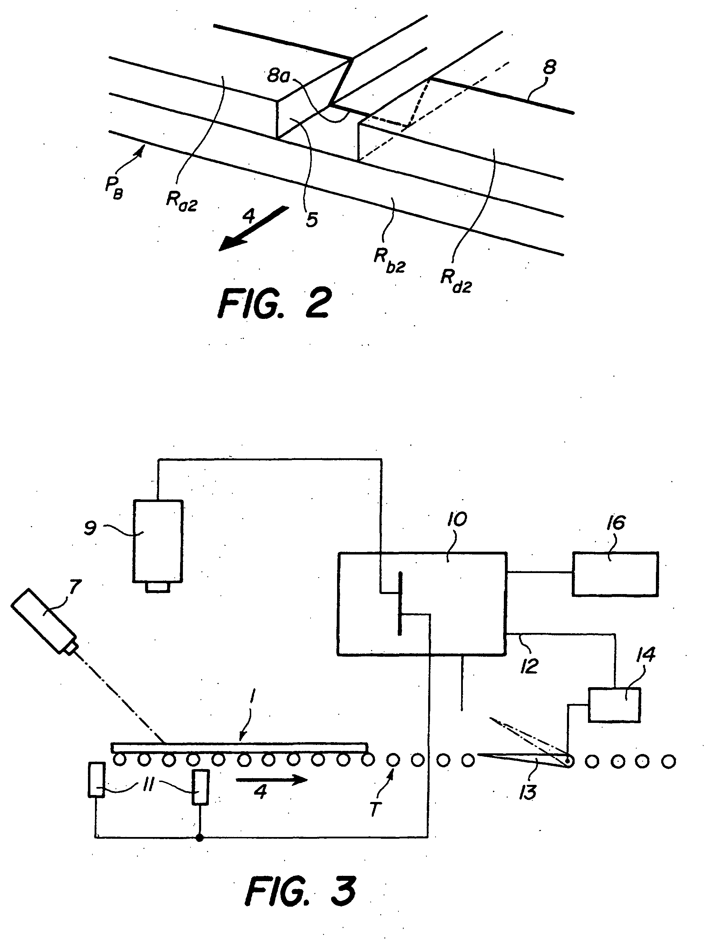

Pour mettre en évidence et permettre de visualiser la largeur de ces refentes 5 et 6 entre les deux rabats Rₐ₁₋₂ et les deux rabats R_{d1-2}, on forme sur la découpe de carton 1, avec une source lumineuse constituée par un laser 7, une raie lumineuse 8 orientée transversalement à l'axe de défilement 4 de la découpe de carton 1 entraînée par le transporteur T de la plieuse. En outre, cette raie lumineuse 8 est issue d'un pinceau lumineux dont l'axe est oblique par rapport au plan de la découpe de carton 1. Par conséquent, comme illustré par la figure 2, compte tenu de l'épaisseur de la découpe de carton 1, le pinceau lumineux dont le plan est incliné par rapport à celui de la découpe de carton 1, forme sur cette découpe 1, à l'endroit de la refente 5 ou 6, une partie 8a décalée latéralement par rapport à la raie 8 formée sur les panneaux P_{A} et P_{D}.

En plaçant une caméra 9 (figure 3) dont l'axe optique est, par exemple, perpendiculaire au plan de la découpe de carton, c'est-à-dire que son axe optique forme un certain angle avec celui du laser 7, cette camera 9 forme une image de la raie lumineuse 8, capable de mettre en évidence le décalage de la partie 8a de cette raie.

Comme illustré par la figure 3, la caméra 9 est reliée à un ordinateur 10 qui est lui-même relié à deux cellules de détection optiques 11 destinées à détecter les refentes 5 et 6 situées respectivement à l'avant et à l'arrière de la découpe de carton 1, par rapport au sens et à l'axe de déplacement 4 de cette découpe de carton 1 sur la plieuse.

L'ordinateur est équipé d'un logiciel de traitement d'image qui permet de reconnaître l'emplacement de la refente sur l'image de la raie lumineuse que lui transmet la caméra 9 et de mesurer la largeur de cette refente, correspondant à la longueur du segment de ligne 8a. Grâce aux cellules 11, l'ordinateur 10 sait également si la refente mesurée est la refente avant 5 ou la refente arrière 6.

L'ordinateur 10 est encore connecté par une liaison RS232 avec une boîte 16 axes utilisée pour transmettre à l'ordinateur 10 des informations de comptage. L'ordinateur 10 comporte encore une sortie 12 exploitable par un système électronique en 24 V (API...) destinée à être activée à chaque découpe de carton 1 dont les refentes sortent des normes. Cette sortie 12 est reliée à un dispositif d'éjection 13 des découpes de carton 1 défectueuses. Ce dispositif d'éjection 13 est constitué par une sorte d'aiguillage disposé le long de la trajectoire de transport de la plieuse, en aval du dispositif de mesure des refentes et actionné par un électro-aimant 14 relié à la sortie 12. Au cas où la découpe de carton a été mesurée hors des normes mini-maxi fixées, l'électro-aimant 14 soulève l'aiguillage du dispositif d'éjection 13 et la découpe de carton 1 est alors dirigée vers le rebut.

Le dispositif de mesure doit lire et mesurer les refentes avants 5 et arrières 6 sur les découpes en mouvement jusqu'à cinq découpes/seconde. La dimension des découpes dans l'axe de déplacement peut aller de 255 à 920 mm. Le pas entre les bords avants ou arrières de deux découpes de carton 1 successives sur la plieuse, dans l'état où cette découpe 1 est illustré par la figure 1 est de 1100 mm. L'information relative à l'ordre d'éjection, donnée sous la forme d'une impulsion sur la sortie 12 est calibrée à environ 100 ms et est activée dans un temps très court (<80 ms) après la fin de l'acquisition des deux images relatives à la refente avant 5 et à la refente arrière 6 d'une découpe de carton 1.

Il est évident que le rôle de l'ordinateur 10 n'est pas exclusivement limité à la commande de l'éjection des découpes de carton 1 défectueuses, mais que comme tout ordinateur, celui-ci peut servir à établir différentes statistiques sur la base des mesures effectuées.

Comme on a pu s'en rendre compte sur la base des données chiffrées relatives à la vitesse de la mesure et de la commande du dispositif d'éjection des découpes de cartons 1 défectueuses, la cadence de la mesure est tout à fait compatible avec celle de la plieuse, de sorte que cette mesure n'entraîne aucune augmentation des coûts de production, par une utilisation de personnel supplémentaire ou par un ralentissement des cadences de production. De ce fait, seul l'investissement du dispositif de mesure entre en ligne de compte, celui-ci pouvant être amorti rapidement compte tenu du gain de sécurité relatif à la qualité du produit. Comme on l'a mentionné, chaque carton étant mesuré, non seulement on a une vérification se rapportant à la totalité de la production, mais il est encore possible de ce fait de dresser des statistiques qui peuvent permettre d'apporter d'autres améliorations en mettant en évidence, par ce biais, l'influence ignorée ou mal connue de certains paramètres sur la précision du pliage des découpes de carton.

## Revendications

1. Procédé pour vérifier la précision du pliage d'une boîte parallélépipèdique réalisée à partir d'une découpe de carton (1) comprenant quatre panneaux adjacents (Pₐ, P_{b}, P_{c}, P_{d}) s'étendant entre deux bords parallèles opposés de cette découpe (1), les autres côtés de ces panneaux (Pₐ, P_{b}, P_{c}, P_{d}) étant alignés selon deux lignes parallèles (2, 3), un desdits deux bords parallèles opposés de la découpe (1) étant muni d'une patte de collage (15), au moins certains desdits autres bords de ces panneaux (Pₐ, P_{b}, P_{c}, P_{d}) adjacents étant associés à des rabats (Rₐ₁, Rₐ₂, R_{b1}, R_{b2}, R_{c1}, R_{c2}, R_{d1}, R_{d2}) destinés à fermer les faces supérieure et inférieure de la boîte, des lignes de pliage étant ménagées entre ces panneaux (Pₐ, P_{b}, P_{c}, P_{d}) d'une part et entre ces panneaux et lesdits rabats (Rₐ₁, Rₐ₂, R_{b1}, R_{b2}, R_{c1}, R_{c2}, R_{d1}, R_{d2}) d'autre part, des refentes (5, 6) à bords parallèles étant ménagées entre lesdits rabats adjacents (Rₐ₁, Rₐ₂, R_{b1}, R_{b2}, R_{c1}, R_{c2}, R_{d1}, R_{d2}), la boîte étant réalisée par pliage des deux panneaux latéraux (Pₐ, P_{d}) adjacents audits bords opposés de la découpe (1) sur les deux autres panneaux (P_{b}, P_{c}) pour amener lesdits bords opposés de ladite découpe (1) à se joindre avec chevauchement de ladite patte de collage (15), **caractérisé en ce que** l'on fait défiler lesdites refentes (5, 6) selon un axe (4) parallèle aux bords desdites refentes (5, 6), que l'on dispose une source de lumière (7) dont l'axe de rayonnement est oblique par rapport au plan desdites découpes (1), que l'on forme à la surface desdites découpes (1), au fur et à mesure que ces découpes coupent ledit axe de rayonnement, une raie lumineuse (8) transversale audit axe de défilement (4) de manière à ce que la portion (8a) de ladite raie lumineuse (8) correspondant audit écartement des bords desdites refentes (5, 6) soit décalée latéralement par rapport aux autres portions de la raie lumineuse (8) et que l'on mesure la largeur de cette portion décalée (8a).

2. Procédé selon la revendication 1, **caractérisé en ce que** l'on détecte le début et la fin du passage desdites refentes (5, 6) le long de ladite trajectoire (4).

3. Procédé selon la revendication 1, **caractérisé en ce que** l'on observe ladite raie lumineuse (8) projetée sur les découpes (1) à partir d'un point d'observation formant un angle avec ledit axe de rayonnement, dont le sommet coïncide sensiblement avec ladite raie lumineuse (8).

4. Dispositif pour la mise en oeuvre du procédé selon la revendication 1, **caractérisé en ce qu'**il comporte une source de lumière (7) dont l'axe de rayonnement est oblique par rapport au plan de ladite découpe (1), conformée pour former une raie lumineuse (8) transversale aux bords desdites refentes (5, 6) avec une portion (8a), décalée latéralement par rapport aux autres portions de la raie lumineuse (8), correspondant à l'écartement entre lesdites refentes (5, 6), des moyens (9) pour observer ladite raie lumineuse (8), disposés pour former un certain angle autour de cette raie (8) par rapport à l'axe de rayonnement de ladite source de lumière (7), des moyens (T) pour créer un déplacement relatif entre ladite source (7) et lesdits moyens d'observation (9) d'une part et lesdites refentes (5, 6) d'autre part selon un axe de déplacement (4) parallèle aux bords desdites refentes (5, 6) et des moyens (10) pour mesurer la longueur de la portion (8a), de ladite raie lumineuse (8), décalée latéralement par rapport aux autres portions de la raie lumineuse (8).

5. Dispositif selon la revendication 4, **caractérisé en ce qu'**il comporte une cellule (11) pour détecter la refente (5) située d'un côté desdits panneaux (Pₐ, P_{b}, P_{c}, P_{d}) et une autre cellule (11) pour détecter la refente (6) située de l'autre côté desdits panneaux (Pₐ, P_{b}, P_{c}, P_{d}).

6. Dispositif selon la revendication 5, **caractérisé en ce qu'**il comporte des moyens (10) pour comparer les mesures entre les bords desdites refentes (5, 6) avec un écartement type.

7. Utilisation du dispositif selon l'une des revendications 4 à 6, sur une plieuse de découpes (1) de boîtes en carton, **caractérisée en ce que** la plieuse comporte des moyens (13) reliés audits moyens (10) pour comparer les mesures entre les bords desdites refentes (5, 6) et pour éliminer les découpes (1) défectueuses en fonction de l'écart mesuré suite à ladite comparaison.

## Patentansprüche

1. Verfahren zur Überprüfung der Genauigkeit der Falzung einer parallelepipedischen Schachtel, die aus einem Pappenzuschnitt (1) hergestellt wird, welcher vier aneinander angrenzende Tafeln (Pₐ, P_{b}, P_{c}, P_{d}) umfasst, die sich zwischen zwei parallelen entgegengesetzten Rändern dieses Zuschnitts (1) erstrecken, wobei die anderen Seiten dieser Tafeln (Pₐ, P_{b}, P_{c}, P_{d}) längs zweier paralleler Linien (2, 3) ausgerichtet sind, wobei einer der zwei parallelen entgegengesetzten Ränder des Zuschnitts (1) mit einer Klebelasche (15) ausgestattet ist, wobei mindestens einigen der anderen Ränder dieser aneinander angrenzenden Tafeln (Pₐ, P_{b}, P_{c}, P_{d}) Laschen (Rₐ₁, Rₐ₂, R_{b1}, R_{b2}, R_{c1}, R_{c2}, R_{d1}, R_{d2}) zugeordnet sind, die zur Schliessung der oberen und unteren Flächen der Schachtel bestimmt sind, wobei Falzlinien einerseits zwischen diesen Tafeln (Pₐ, P_{b}, P_{c}, P_{d}) und andererseits zwischen diesen Tafeln und den Laschen (Rₐ₁, Rₐ₂, R_{b1}, R_{b2}, R_{c1}, R_{c2}, R_{d1}, R_{d2}) angeordnet sind, wobei Schlitze (5, 6) mit parallelen Rändern zwischen den aneinander angrenzenden Laschen (Rₐ₁, Rₐ₂, R_{b1}, R_{b2}, R_{c1}, R_{c2}, R_{d1}, R_{d2}) angeordnet sind, wobei die Schachtel hergestellt ist mittels Falzung der zwei seitlichen an die entgegengesetzten Ränder des Zuschnitts (1) angrenzenden Tafeln (Pₐ, P_{d}) auf die beiden anderen Tafeln (P_{b}, P_{c}), um die entgegengesetzten Ränder des Zuschnitts (1) durch Überlappung mit der Klebelasche (15) in Verbindung zu bringen, **dadurch gekennzeichnet, dass** man die Schlitze (5, 6) längs einer zu den Rändern der Schlitze (5, 6) parallelen Achse (4) bewegt, dass man eine Lichtquelle (7) einrichtet, deren Strahlungsachse schräg zur Fläche der Zuschnitte (1) verläuft, dass man auf der Oberfläche der Zuschnitte (1) in dem Masse, in dem diese Zuschnitte die Strahlungsachse schneiden, einen zur Bewegungsrichtung (4) quer angeordneten Lichtstreifen (8) bildet, dass der Abschnitt (8a) des Lichtstreifens (8), welcher dem Abstand der Ränder der Schlitze (5, 6) entspricht, in Bezug auf die anderen Abschnitte des Lichtstreifens (8) seitlich versetzt wird und dass man die Grösse dieses versetzten Abschnitts (8a) misst.

2. Verfahren gemäss Patentanspruch 1, **dadurch gekennzeichnet, dass** man den Anfang und das Ende des Verlaufs der Schlitze (5, 6) entlang der Trajektorie (4) abtastet.

3. Verfahren gemäss Patentanspruch 1, **dadurch gekennzeichnet, dass** man den auf die Zuschnitte (1) projizierten Lichtstreifen (8) von einem Beobachtungspunkt aus beobachtet, der mit der Strahlungsachse einen Winkel bildet, dessen Spitze mit dem Lichtstreifen (8) im Wesentlichen zusammentrifft.

4. Vorrichtung zur Durchführung des Verfahrens gemäss Patentanspruch 1, **dadurch gekennzeichnet, dass** sie eine Lichtquelle (7) aufweist, deren Strahlungsachse schräg zur Fläche des Zuschnitts (1) verläuft und die ausgebildet ist, um einen zu den Rändern der Schlitze (5, 6) quer angeordneten Lichtstreifen (8) zu bilden, mit einem Abschnitt (8a), welcher in Bezug auf die anderen Abschnitte des Lichtstreifens (8) dem Abstand zwischen den Schlitzen (5, 6) entsprechend seitlich versetzt ist, Mittel (9) zur Beobachtung des Lichtstreifens (8), welche zur Bildung eines gewissen Winkels um diesen Streifen (8) herum in Bezug auf die Strahlungsachse der Lichtquelle (7) eingerichtet sind, Mittel (T), um eine relative Verschiebung zwischen der Quelle (7) und den Beobachtungsmitteln (9) einerseits und den Schlitzen (5, 6) andererseits längs einer zu den Rändern der Schlitze (5, 6) parallelen Verschiebungsachse (4) zu bilden, und Mittel (10), um die Länge des Abschnitts (8a) des Lichtstreifens (8) zu messen, welcher in Bezug auf die anderen Abschnitte des Lichtstreifens (8) seitlich versetzt ist.

5. Vorrichtung gemäss Patentanspruch 4, **dadurch gekennzeichnet, dass** sie eine Zelle (11) aufweist, um den auf der einen Seite der Tafeln (Pₐ, P_{b}, P_{c}, P_{d}) befindlichen Schlitz (5) abzutasten, und eine weitere Zelle (11), um den auf der anderen Seite der Tafeln (Pₐ, P_{b}, P_{c}, P_{d}) befindlichen Schlitz (6) abzutasten.

6. Vorrichtung gemäss Patentanspruch 5, **dadurch gekennzeichnet, dass** sie Mittel (10) aufweist, um die Messungen zwischen den Rändern der Schlitze (5, 6) mit einem Abstandtyp zu vergleichen.

7. Verwendung der Vorrichtung gemäss einem der Patentansprüche 4 bis 6 auf einer Falzmaschine für Zuschnitte (1) von Pappschachteln, **dadurch gekennzeichnet, dass** die Falzmaschine Mittel (13) aufweist, die mit den Mitteln (10) verbunden sind, um die Messungen zwischen den Rändern der Schlitze (5, 6) zu vergleichen und um die fehlerhaften Zuschnitte (1) in Abhängigkeit des gemessenen Abstands nach dem Vergleich zu entfernen.

## Claims

1. A method for checking the accuracy of folding a cuboidal box made from a cardboard blank (1) comprising four adjacent panels (Pₐ, P_{b}, P_{c}, P_{d}) extending between two opposite parallel edges of the blank (1), the other sides of the panels (Pₐ, P_{b}, P_{c}, P_{d}) being aligned along two parallel lines (2, 3), one of the said two opposite parallel edges of the blank (1) being formed with a gluing tab (15), at least some of the said other sides of the adjacent panels (Pₐ, P_{b}, P_{c}, P_{d}) being associated with flaps (Rₐ₁, Rₐ₂, R_{b1}, R_{b2}, R_{c1}, R_{c2}, R_{d1}, R_{d2}) adapted to close the top and bottom surfaces of the box, folding lines being formed between the panels (Pₐ, P_{b}, P_{c}, P_{d}) on the one hand and between the panels and the said flaps (Rₐ₁, Rₐ₂, R_{b1}, R_{b2}, R_{c1}, R_{c2}, R_{d1}, R_{d2}) on the other hand, slots (5, 6) having parallel edges being formed between the said adjacent flaps (Rₐ₁, Rₐ₂, R_{b1}, R_{b2}, R_{c1}, R_{c2}, R_{d1}, R_{d2}), the box being formed by folding the two side panels (Pₐ, P_{d}) adjacent the said opposite edges of the blank (1) on to the other two panels (P_{b}, P_{c}) in order to join the said opposite edges of the said blank (1) so that the gluing tab (15) overlaps, **characterised in that** the slots (5, 6) are moved in a direction (4) parallel to the edges of the said slots (5, 6), a light source (7) is disposed so that its direction of radiation is at an angle to the plane of the blanks (1), a light ray (8) across the said direction of travel (4) is formed on the surface of the blanks (1) at the same rate as the blanks intersect the said direction of radiation, so that the portion (8a) of the said light ray (8) corresponding to the spacing between the edges of the slots (5, 6) is laterally offset relative to the other portions of the light ray (8) and the width of the offset portion (8a) is measured.

2. A method according to claim 1, **characterised in that** the beginning and end of travel of the slots (5, 6) along the said trajectory (4) is detected.

3. A method according to claim 1, **characterised in that** the light ray (8) projected on to the blanks (1) is measured from an observation point at an angle to the said direction of radiation, the apex thereof coinciding substantially with the said light ray (8).

4. A device for working the method according to claim 1, **characterised in that** it comprises a light source (7) which radiates in a direction at an angle to the plane of the said blank (1) and which is shaped so as to form a light ray (8) across the edges of the said slots (5, 6) and having a portion (8a), being laterally offset relative to the other portions of the light ray (8), corresponding to the spacing between the said slots (5, 6), means (9) for observing the said light ray (8), disposed so as to form a given angle around the ray (8) relative to the direction of radiation of the said light source (7), means (T) for moving the source (7) relative to the observation means (9) on the one hand and the slots (5, 6) on the other hand in a direction (4) parallel to the edges of the said slots (5, 6) and means (10) for measuring the length of the portion (8a) of the said light ray (8), the said portion (8a) being laterally offset relative to the other portions of the light ray (8).

5. A device according to claim 4, **characterised in that** it comprises a cell (11) for detecting the slot (5) situated on one side of the panels (Pₐ, P_{b}, P_{c}, P_{d}) and another cell (11) for detecting the slot (6) situated on the other side of the said panels (Pₐ, P_{b}, P_{c}, P_{d}).

6. A device according to claim 5, **characterised in that** it comprises means (10) for comparing the measurements between the edges of the said slots (5, 6) with a typical spacing.

7. Use of the device according to any of claims 4 to 6 on a machine for folding cardboard box blanks (1), **characterised in that** the folding machine comprises means (13) connected to the means (10) for comparing the measurements between the edges of the said slots (5, 6) and for eliminating defective blanks (1) in dependence on the spacing measured as a result of the said comparison.
